# EUROPÄISCHE PATENTSCHRIFT

(11) **EP 1 357 019 B1**
(45) Veröffentlichungstag und Bekanntmachung des Hinweises auf die Patenterteilung: **02.08.2006**
(21) Anmeldenummer: 03007600.4
(22) Anmeldetag: 02.04.2003
(51) Int. Cl.: B62D 25/20, B62D 33/06

(54) **Bodengruppe für ein Fahrerhaus**
Floor pan for a driver compartment
Plancher pour poste de conduite

(30) Priorität: 27.04.2002 DE 10218926
(43) Veröffentlichungstag der Anmeldung: 29.10.2003
(73) Patentinhaber: DaimlerChrysler AG, 70567 Stuttgart (DE)
(72) Erfinder: Bock, Hans-Peter, 71065 Sindelfingen (DE); Fischer, Herbert, 71263 Weil der Stadt (DE)

(56) Entgegenhaltungen:
- EP-A- 1 022 212
- DE-A- 2 610 299
- US-B1- 6 315 351

## Beschreibung

Die vorliegende Erfindung betrifft eine Bodengruppe für ein Fahrerhaus eines Nutzfahrzeugs mit den Merkmalen des Oberbegriffs des Anspruchs 1.

Aus der DE 198 02 092 A1 ist eine derartige Bodengruppe bekannt und umfasst einen sich in Fahrtrichtung des Fahrzeugs erstreckenden Tunnelabschnitt, einen sich bezüglich der Fahrtrichtung links neben dem Tunnelabschnitt erstreckenden und seitlich am Tunnelabschnitt befestigten linken Bodenabschnitt und einen sich bezüglich der Fahrtrichtung rechts neben dem Tunnelabschnitt erstreckenden und seitlich am Tunnelabschnitt befestigten rechten Bodenabschnitt. Der Tunnelabschnitt und die beiden Bodenabschnitte erstrecken sich in der Fahrtrichtung von einem gemeinsamen hinteren Bodengruppenende bis zu einem gemeinsamen vorderen Bodengruppenende.

Unterschiedliche Nutzfahrzeug-Typen erfordern unterschiedliche Ausführungsformen für die Bodengruppe. Beispielsweise kann sich die Bodengruppe eines links gesteuerten Fahrzeugs von der Bodengruppe eines rechts gesteuerten Fahrzeugs durch den für die Pedale erforderlichen Raumbedarf unterscheiden. Je nach Motorisierung muß der Tunnelabschnitt mehr oder weniger weit in das Fahrerhaus hineinragen. Darüber hinaus kann es erforderlich sein, dass die Bodengruppe einen im Frontbereich des Fahrzeugs angeordneten Wärmetauscher eines Kühlkreises einer Brennkraftmaschine des Fahrzeugs verkleiden muß, wobei auch bei unterschiedlichen Motor-Varianten verschiedene Ausgestaltungen möglich sind. Darüber hinaus kann das Fahrerhaus bei unterschiedlichen Fahrzeug-Typen unterschiedliche Breiten besitzen, so dass auch die Bodengruppe mit verschiedenen Breiten bereitgestellt werden muß. Der Aufwand zur Bereitstellung einer Vielzahl von Varianten für die Bodengruppe ist mit hohen Kosten verbunden.

Die vorliegende Erfindung beschäftigt sich mit dem Problem, für eine Bodengruppe der eingangs genannten Art eine verbesserte Ausführungsform anzugeben, die es insbesondere vereinfacht, für verschiedene Fahrzeug-Typen die jeweils passende Bodengruppe bereitzustellen.

Das vorliegende Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, den zwischen den beiden Bodenabschnitten verlaufenden Tunnelabschnitt mehrteilig auszubilden, derart, dass dieser Tunnelabschnitt zumindest ein bezüglich der Fahrtrichtung vorderes Tunnelteil sowie ein damit verbundenes hinteres Tunnelteil aufweist. Hierdurch ist es möglich, diesen Tunnelabschnitt mit Hilfe entsprechend gestalteter Tunnelteile in Abhängigkeit des jeweils gewünschten Fahrzeug-Typs zu gestalten. Durch diese Bauweise ist es außerdem möglich, einzelne Bereiche des Tunnelabschnitts an den jeweiligen Fahrzeug-Typ anzupassen. Dies ist von besonderem Vorteil, da sich insbesondere unterschiedliche Motorvarianten und Interieurvarianten vor allem auf die Gestalt des Tunnelabschnitts auswirken. Die Erfindung ermöglicht es, durch die Auswahl einzelner Teile des Tunnelabschnitts besonders einfach mehrere Varianten für den Tunnelabschnitt und somit für die Bodengruppe bereitzustellen. Da nur einzelne Teile zur Darstellung unterschiedlicher Varianten bereitgestellt werden müssen, ergibt sich insgesamt ein reduzierter Aufwand für die Realisierung verschiedener Fahrzeug-Typen.

Bei einer bevorzugten Ausführungsform kann das vordere Tunnelteil an wenigstens einer Seite über ein vorderes Ansatzteil am jeweiligen Bodenabschnitt befestigt sein. Entsprechendes gilt auch für das hintere Tunnelteil. Mit Hilfe dieser Ansatzteile kann die Variabilität der erfindungsgemäßen Bodengruppe zusätzlich erhöht werden, da die Auswahl unterschiedlicher Ansatzteile und auch das Weglassen von Ansatzteilen die Gestaltungsfreiheit der Bodengruppe erhöht.

Bei einer anderen Ausführungsform kann sich das hintere Tunnelteil oberhalb einer Brennkraftmaschine erstrecken, die im eingebauten Zustand der Bodengruppe unterhalb der Fahrerkabine angeordnet ist. Bei dieser Ausführungsform kann die Bodengruppe besonders einfach an Motorvarianten angepaßt werden, bei denen die Brennkraftmaschine unterschiedliche vertikale Abmessungen besitzt. Zur Bereitstellung unterschiedlicher Bodengruppen-Typen genügt es dann jeweils, das hintere Tunnelteil entsprechend auszuwählen, während das vordere Tunnelteil unverändert verwendet werden kann.

Besonders zweckmäßig ist eine Ausführungsform, bei der das hintere Tunnelteil als abnehmbarer Tunneldeckel ausgebildet ist. Im eingebauten Zustand ist dann die unterhalb der Bodengruppe angeordnete Brennkraftmaschine besonders gut zugänglich, was für bestimmte Wartungsmaßnahmen von Vorteil sein kann. Darüber hinaus vereinfacht das abnehmbare Tunnelteil die Anpassung der Bodengruppe an unterschiedliche Interieurvarianten, da das Tunnelteil entsprechend an die jeweiligen Interieurteile anpassbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine perspektivische Ansicht auf eine Bodengruppe nach der Erfindung,
- Fig. 2 und 3: Ansichten wie in Fig. 1, jedoch bei anderen Ausführungsformen, wobei außerdem jeweils zwei unterschiedliche hintere Tunnelteile dargestellt sind, die wahlweise Bestandteil der Bodengruppe sind.

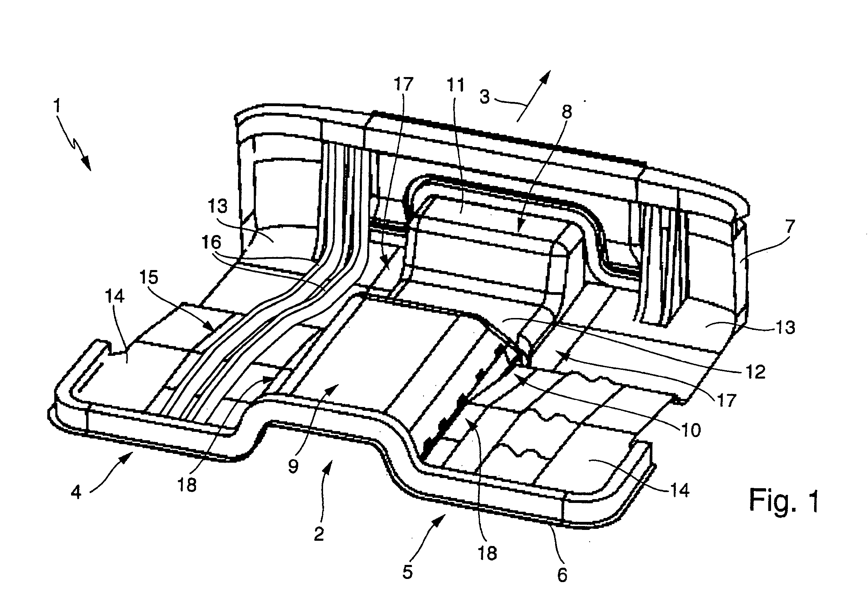

Die Fig. 1 bis 3 zeigen eine Bodengruppe 1 nach der Erfindung, die im eingebauten Zustand bei einem Nutzfahrzeug ein nicht dargestelltes Fahrerhaus des Fahrzeugs nach unten abschließt. Diese Bodengruppe 1 weist einen Tunnelabschnitt 2 auf, der sich in einer durch einen Pfeil symbolisierten Fahrtrichtung 3 des Fahrzeugs erstreckt. Bezüglich der Fahrtrichtung 3 sind links und rechts neben dem Tunnelabschnitt 2 ein linker Bodenabschnitt 4 und ein rechter Bodenabschnitt 5 angeordnet. Beide Bodenabschnitte 4 und 5 erstrecken sich seitlich entlang des Tunnelabschnitts 2 und sind jeweils am Tunnelabschnitt 2 befestigt. Dabei gehen der Tunnelabschnitt 2 und die beiden Bodenabschnitte 4, 5 von einem gemeinsamen hinteren Bodengruppenende 6 aus und erstrecken sich in der Fahrtrichtung 3 bis zu einem gemeinsamen vorderen Bodengruppenende 7.

Erfindungsgemäß ist der Tunnelabschnitt 2 mehrteilig aufgebaut und besitzt zumindest ein bezüglich der Fahrtrichtung 3 vorderes Tunnelteil 8 sowie ein bezüglich der Fahrtrichtung 3 hinteres Tunnelteil 9. Das hintere Tunnelteil 9 beginnt am hinteren Bodengruppenende 6 und erstreckt bis zu einer quer zur Fahrtrichtung 3 und horizontal erstreckenden Trennlinie oder Verbindungsstelle 10, bei der das hintere Tunnelteil 9 mit dem vorderen Tunnelteil 8 verbunden bzw. daran befestigt ist. Das vordere Tunnelteil 8 erstreckt dann vom hinteren Tunnelteil 9 bis zum vorderen Bodengruppenende 7. Sowohl das vordere Tunnelteil 8 als auch das hintere Tunnelteil 9 sind jeweils für sich direkt oder indirekt an den beiden Bodenabschnitten 4 und 5 befestigt.

Das vordere Tunnelteil 8 besitzt an einem bezüglich der Fahrtrichtung 3 vorderen Ende eine Ausbuchtung 11, die in das Fahrerhaus hineinragt und an die nach hinten ein Bereich 12 anschließt, der deutlich tiefer liegt als eine Oberseite dieser Ausbuchtung 11. Die Ausbuchtung 11 dient im eingebauten Zustand der Bodengruppe 1 zur Abdeckung eines hier nicht gezeigten Hauptwärmetauschers eines Motorkühlkreises, der am vorderen Ende des Fahrzeugs angeordnet ist und während der Fahrt mit Fahrtwind beaufschlagt wird.

Die beiden Bodenabschnitte 4 und 5 weisen jeweils einen Fußbodenbereich 13 auf, der im Fahrerhaus einen Fußraum nach unten begrenzt. Die beiden Fußbodenbereiche 13 gehen bezüglich der Fahrtrichtung 3 nach hinten in Sitzbereiche 14 über, die zur Unterstützung eines Fahrersitzes bzw. eines Beifahrersitzes dienen.

Wie aus den Figuren zu entnehmen ist, erstreckt sich das vordere Tunnelteil 8 im wesentlichen entlang der genannten Fußbodenbereiche 13, während sich das hintere Tunnelteil 9 zumindest entlang der Sitzbereiche 14 erstreckt.

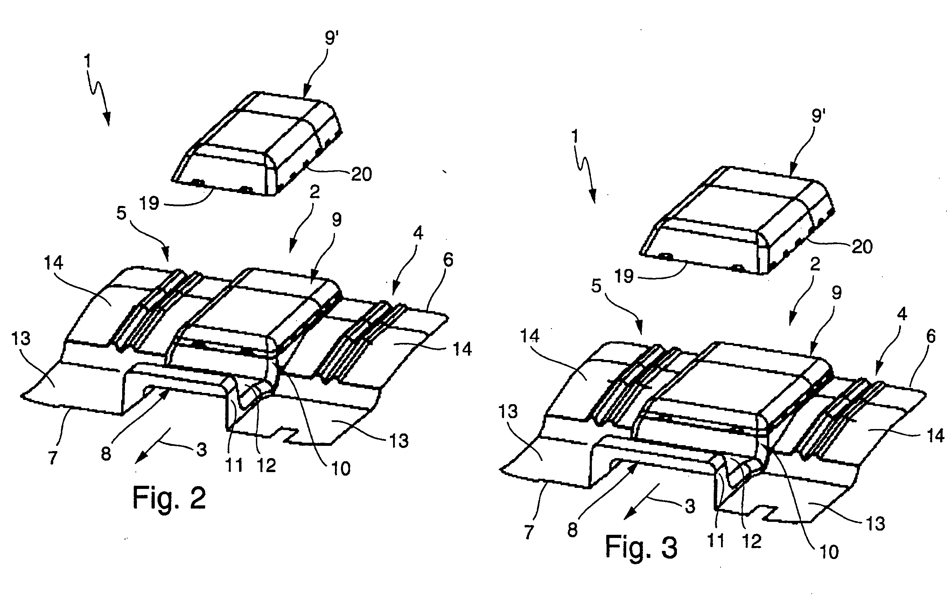

Im Unterschied zu den Darstellungen der Fig. 2 und 3 ist bei der Darstellung gemäß Fig. 1 der linke Bodenabschnitt 4 transparent dargestellt, um einen Einblick auf eine Tragstruktur 15 mit Längsträgern 16 zu erhalten. Mit Hilfe dieser Tragstruktur 15 wird die Bodengruppe 1 unterstützt.

Bei der Ausführungsform gemäß Fig. 1 sind das vordere Tunnelteil 8 und das hintere Tunnelteil 9 jeweils indirekt an den Bodenabschnitten 4 und 5 befestigt. Zu diesem Zweck sind vordere Ansatzteile 17 sowie hintere Ansatzteile 18 vorgesehen. Die vorderen Ansatzteile 17 sind einerseits am vorderen Tunnelteil 8 und andererseits jeweils an einem der Bodenabschnitte 4, 5 befestigt. In entsprechender Weise sind auch die hinteren Ansatzteile 18 einerseits am hinteren Tunnelteil 9 und andererseits jeweils an einem der Bodenabschnitte 4, 5 befestigt. Durch die Auswahl derartiger Ansatzteile 17, 18 kann beispielsweise die Gesamtbreite der Bodengruppe 1 unterschiedlich ausgebildet werden. Durch eine unsymmetrische Anbringung der Ansatzteile 17, 18 ist es insbesondere möglich, auf einer Seite des Fahrerhauses, insbesondere an der Fahrerseite, einen größeren Fußraum auszubilden als auf der anderen Seite. Beispielsweise kann dies für die Unterbringung der Pedale von Vorteil sein.

Bei den Ausführungsformen der Fig. 2 und 3 sind das vordere Tunnelteil 8 und das hintere Tunnelteil 9 jeweils direkt, also ohne Ansatzteile 17, 18 mit den Bodenabschnitten 4,5 verbunden bzw. an diesen befestigt. Die beiden Varianten der Fig. 2 und 3 unterscheiden sich durch unterschiedliche, quer zur Fahrtrichtung 3 und horizontal gemessene Breiten der Tunnelabschnitte 2 sowie der Bodenabschnitte 4 und 5. In Fig. 2 sind die Bodenabschnitte 4 und 5 deutlich breiter ausgebildet als bei der Variante gemäß Fig. 3. Im Unterschied dazu ist bei der Ausführungsform gemäß Fig. 3 der Tunnelabschnitt 2 deutlich breiter ausgestaltet als bei der Ausführung gemäß Fig. 2. Bei beiden Ausführungsformen ist jedoch die Gesamtbreite der Bodengruppe 1 im wesentlichen gleich gewählt.

Dementsprechend unterscheiden sich bei den beiden Ausführungsformen sowohl die hinteren Tunnelteile 9 als auch die vorderen Tunnelteile 8 hinsichtlich ihrer Breite voneinander. Die breitere Variante ist in Fig. 3 dargestellt. Damit die Gesamtbreite der Bodengruppe 1 in etwa gleich bleibt, sind die Breiten der Bodenabschnitte 4 und 5 bei den Ausführungsformen der Fig. 2 und 3 ebenfalls unterschiedlich gewählt.

Die Breite des Tunnelabschnitts 2 kann beispielsweise durch die Breite eines Hauptkühlers vorgegeben sein, dessen oberer Endabschnitt in die Ausbuchtung 11 des vorderen Tunnelteils 8 hineinragt, wenn die Bodengruppe 1 am Fahrzeug montiert ist. Der an die Ausbuchtung 11 anschließende, tiefer liegende Bereich 12 des vorderen Tunnelteils 8 vergrößert den Fußraum der Fahrerkabine, da seine Oberfläche etwa auf dem gleichen Niveau liegt, wie die Fußbodenbereiche 13 der Bodenabschnitte 4 und 5.

In den Fig. 2 und 3 sind oberhalb der montierten hinteren Tunnelteile 9 zusätzlich alternative Ausführungsformen der hinteren Tunnelteile 9' dargestellt, die alternativ montiert werden können. Diese zusätzlich dargestellten alternativen hinteren Tunnelteile 9' besitzen gegenüber den montierten hinteren Tunnelteilen 9 eine größere vertikale Höhe und können beispielsweise dann zur Anwendung kommen, wenn die Bodengruppe 1 für ein Fahrzeug benötigt wird, dessen Brennkraftmaschine eine größere vertikale Abmessung besitzt.

Wie aus den Fig. 2 und 3 besonders deutlich hervorgeht, sind Verbindungszonen 19 und 20, mit denen das hintere Tunnelteil 9 bzw. 9' am vorderen Tunnelteil 8 bzw. an den Bodenabschnitten 4, 5 befestigt ist bzw. befestigt werden kann, jeweils relativ geradlinig. Darüber hinaus liegen diese Verbindungszonen 19, 20 in einer nicht näher bezeichneten Verbindungsebene, die sich im wesentlichen horizontal erstreckt. Durch diese Bauweise wird die Anbindung des hinteren Tunnelteils 9, 9' an die übrigen Komponenten 4, 5, 8, 18 der Bodengruppe 1 erheblich vereinfacht. Insbesondere erleichtert diese Ausgestaltung der Verbindungszonen 19, 20 die Ausbildung des hinteren Tunnelteils 9 bzw. 9' als Tunneldeckel, der abnehmbar an der übrigen Bodengruppe 1 befestigt ist und beispielsweise für Wartungszwecke einen Zugang zur darunter angeordneten Brennkraftmaschine ermöglicht. Des weiteren kann das abnehmbare hintere Tunnelteil 9, 9' aus einem anderen Werkstoff hergestellt werden als die übrigen Komponenten der Bodengruppe 1, wodurch verschiedene Werkstoffkombinationen ermöglicht werden.

Um viele verschiedene Bodengruppen-Varianten aufbauen zu können, wird ein Baukastensystem bereitgestellt, das zweckmäßig mehrere verschiedene hintere Tunnelteile 9, 9' und/oder mehrere verschiedene vordere Tunnelteile 8 und/oder mehrere verschiedene Bodenabschnitte 4 und 5 umfasst. Die einzelnen Komponenten des Baukastensystems können sich beispielsweise hinsichtlich ihrer vertikalen Höhen und/oder hinsichtlich ihrer quer zur Fahrtrichtung 3 gemessenen Breite voneinander unterscheiden. Durch eine entsprechende Vereinheitlichung der Schnittstellen oder Verbindungsstellen können die unterschiedlichen Komponenten auf vielfältige Weise kombiniert werden. Zweckmäßig umfasst das Baukastensystem außerdem die Ansatzteile 17, 18 bzw. mehrere verschiedene Ausführungsformen der Ansatzteile 17, 18. Auch hier ist eine Vereinheitlichung der Schnittstellen oder Verbindungsstellen von Vorteil, um die Ansatzteile 17, 18 je nach Bedarf zwischen den Tunnelteilen 8, 9 und den Bodenabschnitten 4, 5 einsetzen oder weglassen zu können.

## Patentansprüche

1. Bodengruppe für ein Fahrerhaus eines Nutzfahrzeugs,
- mit einem sich in Fahrtrichtung (3) des Fahrzeugs erstreckenden Tunnelabschnitt (2),
- mit einem sich bezüglich der Fahrtrichtung (3) links neben dem Tunnelabschnitt (2) erstreckenden und seitlich am Tunnelabschnitt (2) befestigten linken Bodenabschnitt (4),
- mit einem sich bezüglich der Fahrtrichtung (3) rechts neben dem Tunnelabschnitt (2) erstreckenden und seitlich am Tunnelabschnitt (2) befestigten rechten Bodenabschnitt (5),
- wobei sich der Tunnelabschnitt (2) und die Bodenabschnitte (4, 5) in der Fahrtrichtung (3) von einem gemeinsamen hinteren Bodengruppenende (6) bis zu einem gemeinsamen vorderen Bodengruppenende (7) erstrecken,
**dadurch gekennzeichnet,**
- **dass** der Tunnelabschnitt (2) mehrteilig aufgebaut ist und bezüglich der Fahrtrichtung (3) ein vorderes Tunnelteil (8) und ein damit verbundenes hinteres Tunnelteil (9) aufweist,
- wobei das hinteren Tunnelteil (9) am hinteren Bodengruppenende (6) beginnt und am vorderen Tunnelteil (8) endet, das seinerseits am vorderen Bodengruppenende (7) endet,
- wobei vorderes Tunnelteil (8) und hinteres Tunnelteil (9) jeweils direkt oder indirekt an den Bodenabschnitten (4, 5) befestigt sind.

2. Bodengruppe nach Anspruch 1,
**dadurch gekennzeichnet,**
**dass** das vordere Tunnelteil (8) an wenigstens einer Seite über ein vorderes Ansatzteil (17) am jeweiligen Bodenabschnitt (4, 5) befestigt ist.

3. Bodengruppe nach Anspruch 1 oder 2,
**dadurch gekennzeichnet,**
**dass** das hintere Tunnelteil (9) an wenigstens einer Seite über ein hinteres Ansatzteil (18) am jeweiligen Bodenabschnitt (4, 5) befestigt ist.

4. Bodengruppe nach einem der Ansprüche 1 bis 3,
**dadurch gekennzeichnet,**
**dass** sich das hintere Tunnelteil (9) oberhalb einer Brennkraftmaschine erstreckt, die im eingebauten Zustand der Bodengruppe (1) unterhalb des Fahrerhauses angeordnet ist.

5. Bodengruppe nach einem der Ansprüche 1 bis 4,
**dadurch gekennzeichnet,**
**dass** das hintere Tunnelteil (9) als abnehmbarer Tunneldeckel ausgebildet ist, durch den eine Brennkraftmaschine zugänglich ist, die im eingebauten Zustand der Bodengruppe (1) unterhalb des Fahrerhauses angeordnet ist.

6. Bodengruppe nach einem der Ansprüche 1 bis 5,
**dadurch gekennzeichnet,**
**dass** sich Verbindungszonen (19, 20), mit denen das hintere Tunnelteil (9) am vorderen Tunnelteil (8) und an den hinteren Ansatzteilen (18) oder an den Bodenabschnitten (4, 5) befestigt ist, im wesentlichen in einer Verbindungsebene erstrecken, die sich im wesentlichen horizontal erstreckt.

7. Bodengruppe nach einem der Ansprüche 1 bis 6,
**dadurch gekennzeichnet,**
**dass** die Bodenabschnitte (4, 5) jeweils einen Fußbodenbereich (13) aufweisen und dass sich das vordere Tunnelteil (8) im wesentlichen entlang dieser Fußbodenbereiche (13) erstreckt.

8. Bodengruppe nach einem der Ansprüche 1 bis 7,
**dadurch gekennzeichnet,**
**dass** das vordere Tunnelteil (8) an einem bezüglich der Fahrtrichtung (3) vorderen Ende eine in das Fahrerhaus hineinragende Ausbuchtung (11) aufweist, die im eingebauten Zustand der Bodengruppe (1) einen Hauptwärmetauscher eines Kühlkreises einer Brennkraftmaschine des Fahrzeugs von oben abdeckt, und dass ein nach hinten an die Ausbuchtung (11) anschließender Bereich (12) des vorderen Tunnelteils (8) tiefer liegt als die Oberseite der Ausbuchtung (11).

9. Baukastensystem zum Aufbau einer Bodengruppe nach einem der Ansprüche 1 bis 8, mit wenigstens zwei verschiedenen hinteren Tunnelteilen (9), die sich hinsichtlich ihrer vertikalen Höhe voneinander unterscheiden, jedoch identische Verbindungsabschnitt zur Befestigung an den Bodenabschnitten (4, 5) oder an den hinteren Ansatzteilen (18) aufweisen.

10. Baukastensystem nach Anspruch 9,
**dadurch gekennzeichnet,**
**dass** wenigstens zwei hintere Tunnelteile (9) und zwei vordere Tunnelteile (8) vorgesehen sind, die auf verschiedene, quer zur Fahrtrichtung gemessene Breiten abgestimmt sind.

11. Baukastensystem nach Anspruch 9 oder 10,
**dadurch gekennzeichnet,**
**dass** wenigstens zwei linke Bodenabschnitte (4) und/oder zwei rechte Bodenabschnitte (5) vorgesehen sind, die auf verschiedene, quer zur Fahrtrichtung gemessene Breiten abgestimmt sind.

## Claims

1. Floor assembly for a driver's cab of a commercial vehicle,
- having a tunnel section (2) extending in the direction of travel (3) of the vehicle,
- having a left floor section (4) which extends on the left, with regard to the direction of travel (3), next to the tunnel section (2) and is fastened laterally to the tunnel section (2),
- having a right floor section (5) which extends on the right, with regard to the direction of travel (3), next to the tunnel section (2) and is fastened laterally to the tunnel section (2),
- the tunnel section (2) and the floor sections (4, 5) extending in the direction of travel (3) from a common, rear floor assembly end (6) as far as a common, front floor assembly end (7),
**characterized**
- **in that** the tunnel section (2) is of multipart construction and, with regard to the direction of travel (3), has a front tunnel part (8) and a rear tunnel part (9) connected thereto,
- the rear tunnel part (9) beginning at the rear floor assembly end (6) and ending at the front tunnel part (8) which, for its part, ends at the front floor assembly end (7),
- the front tunnel part (8) and rear tunnel part (9) being fastened in each case directly or indirectly to the floor sections (4, 5).

2. Floor assembly according to Claim 1, **characterized in that** the front tunnel part (8) is fastened on at least one side to the respective floor section (4, 5) via a front attachment part (17).

3. Floor assembly according to Claim 1 or 2, **characterized in that** the rear tunnel part (9) is fastened on at least one side to the respective floor section (4, 5) via a rear attachment part (18).

4. Floor assembly according to one of Claims 1 to 3, **characterized in that** the rear tunnel part (9) extends above an internal combustion engine which, in the installed state of the floor assembly (1), is arranged below the driver's cab.

5. Floor assembly according to one of Claims 1 to 4, **characterized in that** the rear tunnel part (9) is designed as a removable tunnel cover giving access to an internal combustion engine which, in the installed state of the floor assembly (1), is arranged below the driver's cab.

6. Floor assembly according to one of Claims 1 to 5, **characterized in that** connecting zones (19, 20), with which the rear tunnel part (9) is fastened to the front tunnel part (8) and to the rear attachment parts (18) or to the floor sections (4, 5), extend essentially in a connecting plane which extends essentially horizontally.

7. Floor assembly according to one of Claims 1 to 6, **characterized in that** the floor sections (4, 5) each have a flooring region (13), and **in that** the front tunnel part (8) extends essentially along these flooring regions (13).

8. Floor assembly according to one of Claims 1 to 7, **characterized in that** the front tunnel part (8) has, at a front end with regard to the direction of travel (3), an indentation (11) which protrudes into the driver's cab and, in the installed state of the floor assembly (1), covers a main heat exchanger of a cooling circuit of an internal combustion engine of the vehicle from above, and **in that** a region (12) of the front tunnel part (8), which region adjoins the indentation (11) to the rear, lies lower than the upper side of the indentation (11).

9. Modular construction system for constructing a floor assembly according to one of Claims 1 to 8, having at least two different rear tunnel parts (9) which differ from each other in respect of their vertical height, but have identical connecting sections for fastening them to the floor sections (4, 5) or to the rear attachment parts (18).

10. Modular construction system according to Claim 9, **characterized in that** at least two rear tunnel parts (9) and two front tunnel parts (8) are provided, the tunnel parts being tailored to different widths, as measured transversely with respect to the direction of travel.

11. Modular construction system according to Claim 9 or 10, **characterized in that** at least two left floor sections (4) and/or two right floor sections (5) are provided, the floor sections being tailored to different widths, as measured transversely with respect to the direction of travel.

## Revendications

1. Ensemble plancher pour une cabine de conduite d'un véhicule utilitaire,
- comprenant une partie tunnel (2) s'étendant dans le sens de marche (3) du véhicule,
- une partie plancher (4) gauche, s'étendant à gauche à côté de la partie tunnel (2) par rapport au sens de marche (3) et fixée sur le côté de la partie tunnel (2),
- une partie plancher (5) droite s'étendant à droite à côté de la partie tunnel (2) par rapport au sens de marche (3) et fixée sur le côté de la partie tunnel (2),
- la partie tunnel (2) et les parties plancher (4, 5) s'étendant dans le sens de marche (3) depuis une extrémité d'ensemble plancher (6) arrière commune jusqu'à une extrémité d'ensemble plancher (7) avant commune,
**caractérisé en ce que**,
- la partie tunnel (2) est conçue en plusieurs parties et présente par rapport au sens de marche (3) une partie tunnel (8) avant et une partie tunnel (9) arrière reliée à la première,
- la partie tunnel (9) arrière commençant sur l'extrémité d'ensemble plancher (6) arrière et se terminant sur la partie tunnel (8) avant, qui pour sa part se termine sur l'extrémité d'ensemble plancher (7) avant,
- la partie tunnel (8) avant et la partie tunnel (9) arrière étant fixées chacune directement ou indirectement sur les parties plancher (4, 5).

2. Ensemble plancher selon la revendication 1, **caractérisé en ce que** la partie tunnel (8) avant est fixée sur au moins un côté par une partie ajoutée (17) avant sur la partie plancher (4, 5) concernée.

3. Ensemble plancher selon la revendication 1 ou 2, **caractérisé en ce que** la partie tunnel (9) arrière est fixée sur au moins un côté par une partie ajoutée (18) arrière sur la partie plancher (4, 5) concernée.

4. Ensemble plancher selon l'une quelconque des revendications 1 à 3, **caractérisé en ce que** la partie tunnel (9) arrière s'étend au-dessus d'un moteur à combustion interne qui est disposé au-dessous de la cabine de conduite lorsque l'ensemble plancher (1) est monté.

5. Ensemble plancher selon l'une quelconque des revendications 1 à 4, **caractérisé en ce que**, la partie tunnel (9) arrière est conçue comme un couvercle de tunnel amovible, par lequel un moteur à combustion interne est accessible, lequel est disposé au-dessous de la cabine de conduite lorsque l'ensemble plancher (1) est monté.

6. Ensemble plancher selon l'une quelconque des revendications 1 à 5, **caractérisé en ce que**, des zones de liaison (19, 20), avec lesquelles la partie tunnel (9) arrière est fixée sur la partie tunnel (8) avant et sur les parties ajoutées (18) arrière ou sur les parties plancher (4, 5), s'étendent essentiellement dans un plan de liaison qui s'étend essentiellement horizontalement.

7. Ensemble plancher selon l'une quelconque des revendications 1 à 6, **caractérisé en ce que**, les parties plancher (4, 5) présentent chacune une zone de plancher (13) et **en ce que** la partie tunnel (8) avant s'étend sensiblement le long de ces zones de plancher (13).

8. Ensemble plancher selon l'une quelconque des revendications 1 à 7, **caractérisé en ce que**, la partie tunnel (8) avant présente sur une extrémité avant par rapport au sens de marche (3) un évasement (11) dépassant à l'intérieur de la cabine de conduite, qui masque un échangeur de chaleur principal d'un circuit de refroidissement d'un moteur à combustion interne du véhicule par en haut lorsque l'ensemble plancher (1) est monté, et **en ce qu'**une zone (12), se raccordant vers l'arrière a l'évasement (11), de la partie tunnel (8) avant est disposée plus bas que le côté supérieur de l'évasement (11).

9. Système modulaire pour la mise en place d'un ensemble plancher selon l'une quelconque des revendications 1 à 8, comprenant au moins deux parties tunnel (9) arrière différentes, qui se différencient l'une de l'autre en ce qui concerne leur hauteur verticale, mais présentent des parties de liaison identiques pour la fixation sur les parties plancher (4, 5) ou sur les parties ajoutées (18) arrière.

10. Système modulaire selon la revendication 9, **caractérisé en ce qu'**au moins deux parties tunnel (9) arrière et deux parties tunnel (8) avant sont prévues, lesquelles sont adaptées à différentes largeurs, mesurées transversalement au sens de marche.

11. Système modulaire selon la revendication 9 ou 10, **caractérisé en ce qu'**au moins deux parties plancher (4) gauches et/ou deux parties plancher (5) droites sont prévues, lesquelles sont adaptées à différentes largeurs, mesurées transversalement au sens de marche.
